(19)

Europäisches
Patentamt
European
Patent Office
Office européen
des brevets

(11) **EP 3 165 900 A1**

(12) **EUROPEAN PATENT APPLICATION**

(43) Date of publication:
**10.05.2017 Bulletin 2017/19**

(51) Int Cl.:
***G01N 21/31*** *(2006.01)*

(21) Application number: **15193668.9**

(22) Date of filing: **09.11.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicants:
• **F. Hoffmann-La Roche AG
4070 Basel (CH)**
Designated Contracting States:
**AL AT BE BG CH CY CZ DK EE ES FI FR GB GR
HR HU IE IS IT LI LT LU LV MC MK MT NL NO PL
PT RO RS SE SI SK SM TR**
• **Roche Diagnostics GmbH
68305 Mannheim (DE)**
Designated Contracting States:
**DE**

(72) Inventor: **HARBERS, Rik
6330 Cham (CH)**

(74) Representative: **Peterreins Schley
Patent- und Rechtsanwälte
Hermann-Sack-Strasse 3
80331 München (DE)**

Remarks:
A request for correction of claims has been filed
pursuant to Rule 139 EPC. A decision on the request
will be taken during the proceedings before the
Examining Division (Guidelines for Examination in
the EPO, A-V, 3.).

(54) **MULTI-WAVELENGTH ILLUMINATION FOR SPECTRAL INTERFERENCE DETECTION**

(57) In one aspect of the present disclosure a detection system for detecting interferences in biological samples includes a light source configured to illuminate a biological sample with light, the light including three or more non-overlapping and spectrally spaced-apart wavelength bands, a detector including one or more pixels configured to detect light emitted from the biological sample in response to illumination by the light source and configured to output an output signal indicative of a detected light level, the light source and/or the detector being configured so that at a predetermined time only remitted light in one of the three or more non-overlapping and spectrally spaced-apart wavelength bands is detected by a predetermined pixel of the detector, the detection system further including a processor configured to receive output signals corresponding to emitted light only at each of the three or more non-overlapping and spectrally spaced-apart wavelength bands and to execute an interference detection algorithm using the received output signals.

Figure 6

# Description

## Technical Field

This disclosure relates to systems and methods for detecting interferences in biological samples.

## Background

Biological samples (e.g., blood plasma or blood serum samples) can include constituents which can interfere with analytic tests ('interferences'). For examples, blood plasma or blood serum samples can include hemolytic (i.e., caused by hemoglobin), icteric (i.e., caused by bilirubin) and lipemic (e.g., caused by lipoproteins) interferences that might impair the accuracy of analytic tests performed on the blood plasma or blood serum samples. Therefore, some automated analysis systems include detection systems to detect and/or quantify a level of different interferences in biological samples to avoid measurement errors in subsequent analytical tests.

## Summary

In a first general aspect a detection system for detecting interferences in biological samples includes a light source configured to illuminate a biological sample with light, the light including three or more non-overlapping and spectrally spaced-apart wavelength bands, a detector including one or more pixels configured to detect light emitted from the biological sample in response to illumination by the light source and configured to output an output signal indicative of a detected light level, the light source and/or the detector being configured so that at a predetermined time only remitted light in one of the three or more non-overlapping and spectrally spaced-apart wavelength bands is detected by a predetermined pixel of the detector, the detection system further including a processor configured to receive output signals corresponding to emitted light only at each of the three or more non-overlapping and spectrally spaced-apart wavelength bands and to execute an interference detection algorithm using the received output signals.

In a second general aspect a method for detecting interferences in biological samples includes illuminating a biological sample with light, the light including three or more non-overlapping and spectrally spaced-apart wavelength bands, detecting light emitted from the biological sample in response to the illumination by a detector including one or more pixels, only emitted light in one of the three or more non-overlapping wavelength bands being detected by a predetermined pixel of the detector at a predetermined time and executing an interference detection algorithm based on detected emitted light only at each of the three or more non-overlapping and spectrally spaced-apart wavelength bands.

The system of the first general aspect and the method of the second general aspect can have one or more of the following advantages.

Firstly, interferences in a biological sample can be detected in an automated or semi-automated manner in same examples. If the interferences cannot be detected at least partially in an automated manner, these samples (or at least some of them) have to be controlled visually / manually in some known analysis systems. This can slow down the analysis process substantially as a comparatively high percentage of biological samples can include interferences in some situations.

Secondly, the system of the first general aspect and the method of the second general aspect can operate with comparatively low-cost and robust components in some examples. It might not be necessary to provide high-cost spectroscopic equipment. Rather, a camera (e.g., a CCD or CMOS camera) and comparatively cheap optical filters can be sufficient in some examples. Thirdly, the system of the first general aspect and the method of the second general aspect can improve a level of accuracy of an interference detection process and/or facilitate a quantitative detection of one or more interferences in biological samples.

Fourthly, in some examples of the present disclosure only signals at three or more discrete and comparatively narrow bandwidths can be used. This can allow for a quantitative determination of plural interferences in a biological sample, as positions in the emission spectrum of a particular interference which are comparatively sensitive to changes in a concentration of the particular interference can be selected. In this manner, the concentration two or three interferences (e.g., hemolytic, icteric and lypemic interference) can be determined at the same time in some examples.

Several terms are used in the present disclosure in a particular manner.

The term 'light' as used in the present disclosure includes but is not limited to radiation in the visible wavelength range. In some examples, light can include radiation having a wavelength of over 250 nm and below 2000 nm (for instance, a wavelength between 350 nm and 1000 nm).

The term 'non-overlapping' in the present disclosure does not mean that two non-overlapping wavelength bands have absolutely no overlap (i.e., no spectral component of a first wavelength band ca be found in a second, non-overlapping wavelength band). Rather, the term 'non-overlapping' refers to a situation where a spectral power of a first wavelength band is less than 5% (e.g., less than 1%) of a spectral power of a second, non-overlapping wavelength band for a wavelength for which a spectral power of the second wavelength band is higher than 5% of the maximum spectral power (e.g., higher than 1% of the maximum spectral power) of radiation in the second wavelength band.

The term 'spectrally spaced apart' relates to a predetermined spectral separation between two wavelength bands. For example, two 'spaced apart' wavelength bands can be separated by at least 20 nm, or at least 50 nm in some examples.

The terms 'bandwidth' or 'spectral width' are determined as the extension of the wavelength band between the outermost points where a spectral intensity of the radiation in the wavelength band or a transmissivity of a filter drops below 1/e of a maximum spectral intensity or transmissivity.

The term 'biological sample' refers to material(s) that may potentially contain an analyte of interest. The patient sample can be derived from any biological source, such as a physiological fluid, including blood, saliva, ocular lens fluid, cerebrospinal fluid, sweat, urine, stool, semen, milk, ascites fluid, mucous, synovial fluid, peritoneal fluid, amniotic fluid, tissue, cultured cells, or the like. The patient sample can be pretreated prior to use, such as preparing plasma from blood, diluting viscous fluids, lysis or the like. Methods of treatment can involve filtration, distillation, concentration, inactivation of interfering components, and the addition of reagents. A patient sample may be used directly as obtained from the source or used following a pretreatment to modify the character of the sample. In some embodiments, an initially solid or semi-solid biological material can be rendered liquid by dissolving or suspending it with a suitable liquid medium. In some embodiments, the sample can be suspected to contain a certain antigen or nucleic acid.

In some examples, a patient sample is provided in a primary tube and interferences are detected by illuminating the sample in the primary tube.

**Description of the Drawings**

FIG. 1 illustrates an example detection system according to the present disclosure.
FIG. 2 illustrates another example detection system according to the present disclosure.
FIG. 3 illustrates a third example detection system according to the present disclosure.
FIG. 4 illustrates a fourth example detection system according to the present disclosure.
FIG. 5 illustrates absorption spectra of hemolytic, icteric and lipemic interferences.
FIG. 6 illustrates an example set of wavelength bands used for detection of interferences according to the present disclosure.

**Detailed Description**

The systems and methods for detecting interferences in biological samples will subsequently be discussed in more detail.

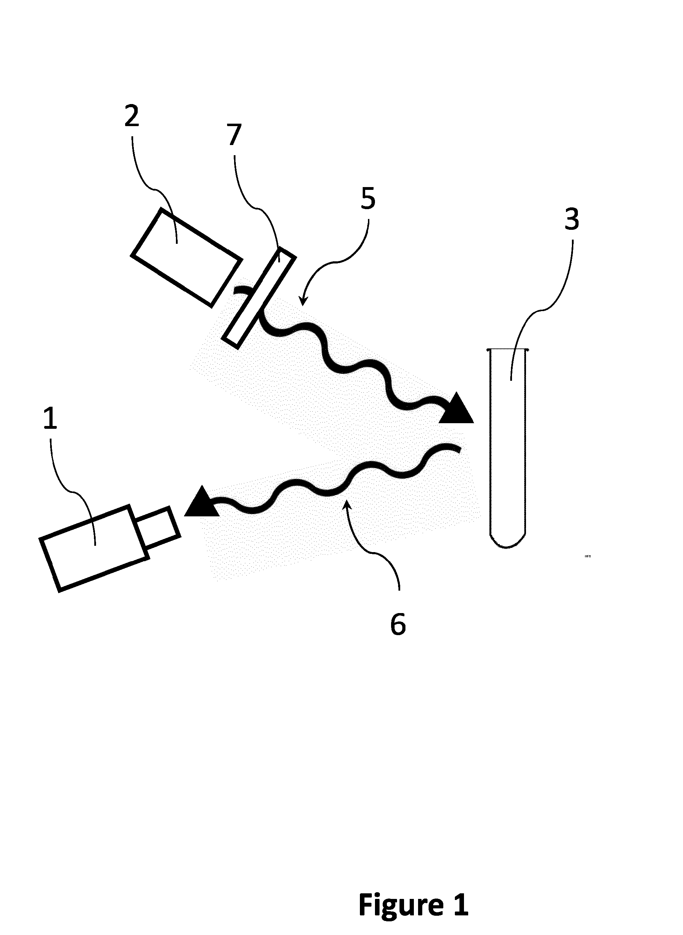

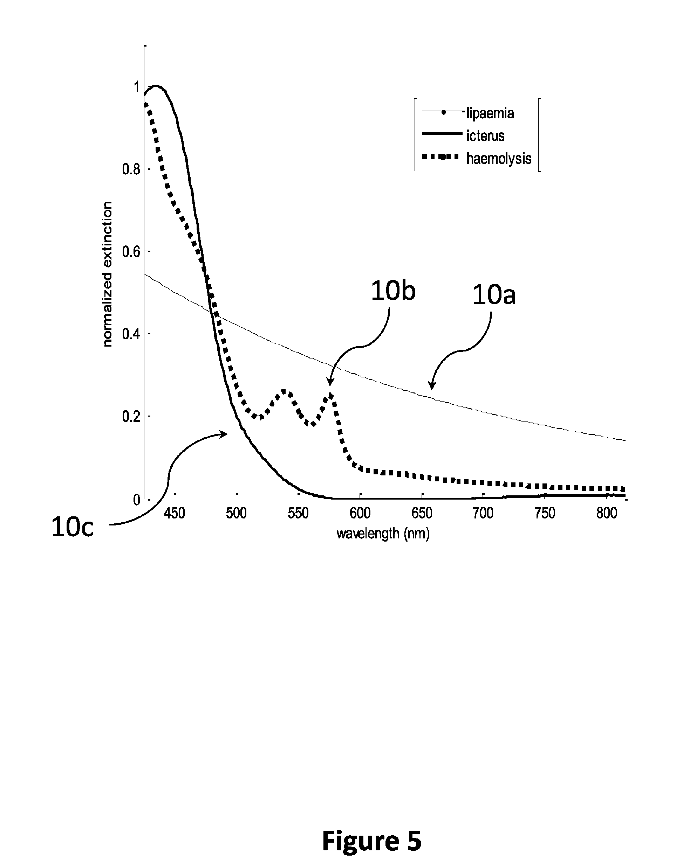

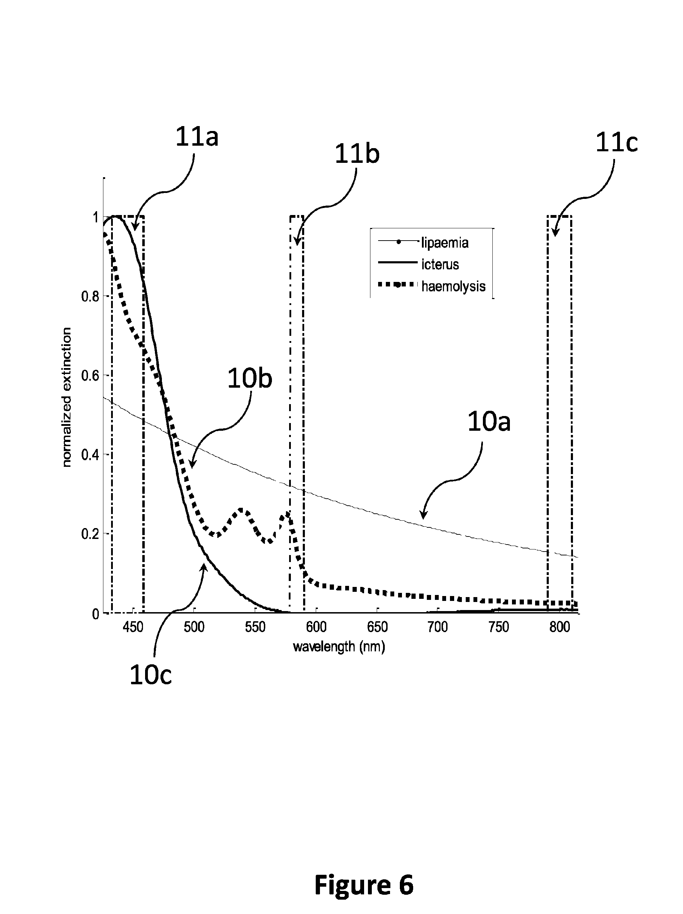

First, four different set-ups of a system for detecting interferences in a biological sample will be discussed in connection with **FIG. 1** to **FIG. 4**. Subsequently, details of the selection of the non-overlapping and spectrally spaced-apart wavelength bands for detecting interferences according to the present disclosure will be discussed in connection with **FIG. 5** and **FIG. 6**. **FIG. 1** shows a detection system for detecting interferences in biological samples including a light source 2 configured to illuminate a biological sample 3 in a primary tube with light 5, the light 5 including three or more non-overlapping and spectrally spaced-apart wavelength bands, a camera 1 including multiple pixels configured to detect light 6 emitted from the biological sample 3 in response to illumination by the light source 2, and configured to output an output signal indicative of a detected light level, the light source 2 and/or the camera 1 being configured so that at a predetermined time only emitted light 6 in one of the three or more non-overlapping and spectrally spaced-apart wavelength bands is detected by a predetermined pixel of the camera 1 and a processor configured to receive output signals corresponding to emitted light 6 only at each of the three or more non-overlapping wavelength bands and to execute an interference detection algorithm using the received output signals.

The three or more non-overlapping and spectrally spaced-apart wavelength bands can be selected to match salient features of the absorption spectra of predetermined interferences. In one example, one or more of the three or more non-overlapping and spectrally spaced-apart wavelength bands covers a wavelength range in which the absorption of a first interference (e.g., hemolytic interference) is substantially higher (e.g., four times higher) than the absorption of a second interference (e.g., an icteric interference) when both interferences (e.g., a hemolytic and an icteric interference) are present at the same concentration in a biological sample. In addition or alternatively, one or more of the three or more non-overlapping and spectrally spaced-apart wavelength bands covers a wavelength range in which the absorption of a first interference (e.g., a lipemic interference) is substantially higher (e.g., four times higher) than the absorption of a second and a third interference (e.g., a hemolytic and an icteric interference) when all three interferences are present at the same concentration in a biological sample.

In addition or alternatively, two or more wavelength bands (e.g., all) of the three or more non-overlapping and spectrally spaced-apart wavelength bands can have a bandwidth of less than 20 nm, preferably a bandwidth of less than 10 nm, more preferably a bandwidth of less than 5 nm.

In the example of **FIG. 1,** an optical filter 7 which is adapted to sequentially let pass only light of one of the three more non-overlapping wavelength bands is arranged between the camera 1 and the sample 3. A controller (not shown in **FIG. 1**) of the detection system can be configured to control the operation of the filter 7.

In one example, the filter 7 can include an absorptive and/or reflective optical filter (e.g., an optical filter exploiting thin-film interference effects).

The filter can have one filter element for each of the three or more non-overlapping and spectrally spaced-apart wavelength bands which are configured to be moved into a path of the light 5 generated by the light source 2 between the light source 2 and the biological sample 3. In one example, the filter elements are arranged in a filter wheel or a filter slab. The detections system can have one or more actuators to move the filter into the light path between the light source 2 and the biological sample.

In another example, the filter 7 can be a tunable filter that can be tuned to sequentially let pass only light of one of the three more non-overlapping and spectrally spaced-apart wavelength bands (e.g., a tunable filter employing liquid crystals).

The filter 7 can employ a combination of two or more filter elements to let pass only light of one of the three more non-overlapping and spectrally spaced-apart wavelength bands.

In the example of **FIG. 1,** the emitted light 6 returning from the sample will substantially consist of the same wavelengths as light impinging onto the biological sample 3. Therefore, the camera 1 will sequentially detect emitted light 6 at each of the three or more spaced-apart non-overlapping wavelength bands. The detection levels of emitted light in the three or more spaced-apart non-overlapping wavelength bands can be used by a processor (not shown in **FIG. 1**) of the detection system to detect interferences in the biological sample 3.

In one example, the processor can be configured to combine the output signals corresponding to emitted light at each of the three or more non-overlapping and spectrally spaced-apart wavelength bands into a single value and determine a quantity of each of three or more different interferences by processing the single value.

For instance, the expression used to determine a quantity of each of the three or more different interferences can have the following form:

$$E = \sum_{\lambda 1}^{\lambda N} E(\lambda) = \sum_{\lambda 1}^{\lambda N} \sum_{j=1}^{J} Kj(\lambda n) \, \frac{cj}{qdil} + E_g(\lambda_n).$$

As can be seen, "E" corresponds to a sum of the spectrally resolved values "E($\lambda$)" over wavelength bands "$\lambda_1$" to "$\lambda_N$." The wavelength bands "$\lambda_1$" to "$\lambda_N$" are the three or more non-overlapping and spectrally spaced-apart wavelength bands of the present disclosure (i.e., "N" refers to the number of the non-overlapping spaced apart wavelength bands and the outer sum of the above equation runs from 1 to N).

In addition, the terms "E($\lambda$)" are extinction values corresponding to the output signals corresponding to emitted light at each of the three or more non-overlapping and spectrally and spectrally spaced-apart wavelength bands (e.g., "E($\lambda_2$)" denotes an extinction value at a second one of the non-overlapping spaced apart wavelength bands). Thus, only terms corresponding to the emitted light at each of the three or more non-overlapping and spectrally spaced-apart wavelength bands enter the equation.

On the right hand side of the equation, $K_j$ and $C_j$ are the specific extinction coefficients and the concentrations of each interfering substance denoted with the index j (i.e., j runs from 1, 2, to J), respectively. The known dilution of the target sample under investigation is denoted by $q_{dil}$, i.e. "(original concentrations):(sample concentrations)=(1:$q_{dil}$)." Eg characterizes the extinction characteristic of the sample matrix, e.g. blood serum or plasma.

The extinction coefficients $K_i$ of the interferences $K_j$ can be known (e.g., the extinction coefficients of lipemic, icteric and hemolytic interferences). In some examples, the extinction characteristic of the sample matrix, e.g. blood serum or plasma, might also be known. Thus, the concentrations $C_j$ of each interfering substance can be the only unknowns in the above equation in some examples. The processor can solve the equation above to retrieve the concentration $C_j$ of each interfering substance.

In another example, the processor can use one of the algorithms discussed in European patent application EP 1 059 522 A1 to determine a concentration of one or more interferences in the biological sample.

In the example of **FIG. 1** the filter 7 is arranged between the light source 1 and the biological sample 3. In other examples, the filter can be arranged between the biological sample 3 and the camera 1.

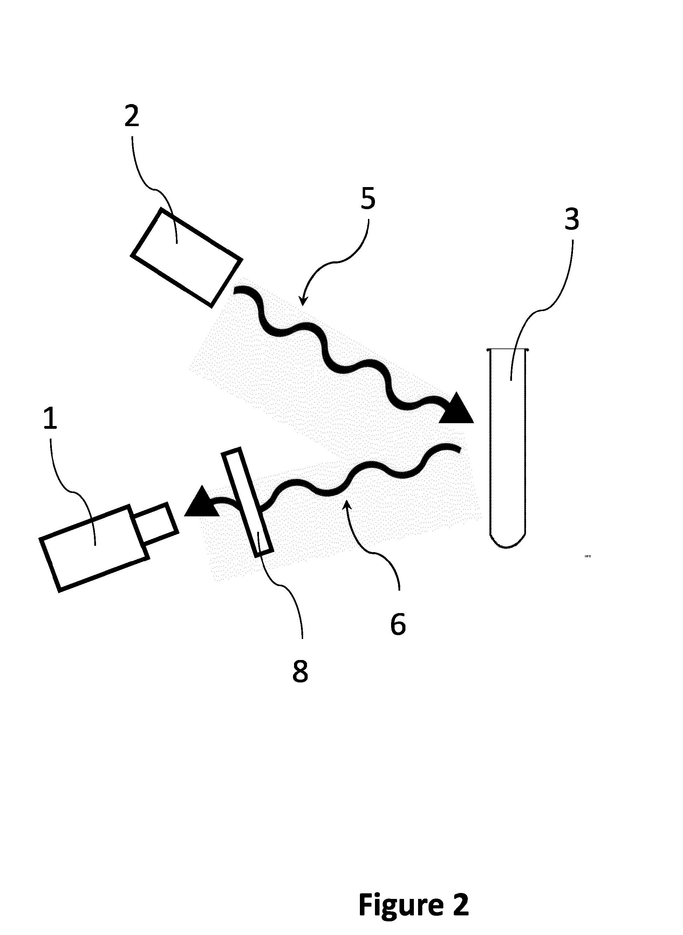

**FIG. 2** illustrates this type of arrangement including a filter 8 between the biological sample 3 and the camera 1. As can be seen in **FIG. 2,** the filter 8 is configured to sequentially let pass only light of one of the three more non-overlapping and spectrally spaced-apart wavelength bands of the emitted light 6. The same types and arrangements of filters discussed above in connection with **FIG. 1** can also be used when the filter is arranged to filter emitted light as shown in the example of **FIG. 2.**

Returning to **FIG. 1,** it should be pointed out that the light 5 including three or more non-overlapping and spectrally spaced-apart wavelength bands does not have to have three continuous spectral bands within each of the three or more non-overlapping wavelength bands. In one example, the light 5 can include one or more discrete and (substantially) single frequency components in the respective wavelength band of the three or more non-overlapping and spectrally spaced-apart wavelength bands (e.g., light generated by one or more laser sources). In other examples, the light 5 includes a substantially continuous spectral component spanning each of three or more non-overlapping and spectrally spaced-apart wavelength bands (e.g., light generated by three light emitting diodes or other comparatively broad-band light sources). For instance, the light source includes a white light source. In this (and in other examples) the light source can also generate light outside of three or more non-overlapping and spectrally spaced-apart wavelength bands (which can be filtered out by filter 7 of **FIG. 1** or filter 8 of **FIG. 2**). Example non-overlapping wavelength bands are depicted in **FIG. 6.** In this example, a light source could include three lasers emitting light at 440 nm, 580 nm and 800 nm.

The camera 1 can be a CCD- or CMOS camera. In one example, the camera is a monochrome camera (i.e., the camera does not have filters with different passbands arranged over different pixels of the camera).

In the schematic drawings of **FIG. 1** and **FIG. 2** the light sources 2 and the camera 1 are arranged so that emitted light 6 is measured in reflection. In other examples of the present disclosure the emitted light is measured in transmission, or in both reflection and transmission (e.g., by adding a second camera).

The light sources and the cameras of the present disclosure can include optics to guide the light 5 from the light source 2 to the biological sample 3, and to guide the emitted light 6 from the biological sample 3 to the camera 2.

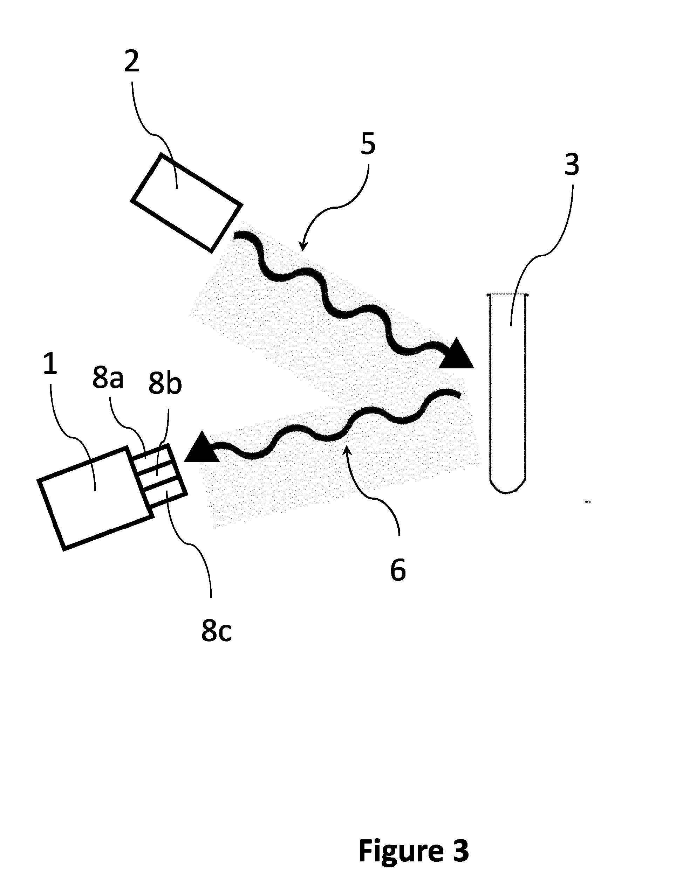

In the example detection system of **FIG. 1** and **FIG. 2** filters have been used which are arranged in the path of the emitted or emitted light. **FIG. 3** illustrates an example detection system employing another alternative way of securing that at a predetermined time only emitted light in one of the three or more non-overlapping and spectrally spaced-apart wavelength bands is detected by a predetermined pixel of the camera.

In the example of **FIG. 3** a plurality of filters 8a, 8b, 8c are arranged over the multiple pixels of the camera 1. For instance, each pixel or a group of pixels of the multiple pixels can be equipped with a dedicated filter 8a, 8b, 8c configured to let pass only light of one of the three more non-overlapping and spectrally spaced-apart wavelength bands. In this matter, emitted light of all three or more non-overlapping and spectrally spaced-apart wavelength bands is detected at the camera 1 in parallel but with different pixels of the multiple pixels of the camera 1. The camera 1 can be constructed in a similar way as a RBG camera, only that the filters 8a, 8b, 8c have non-overlapping and spectrally spaced-apart passbands.

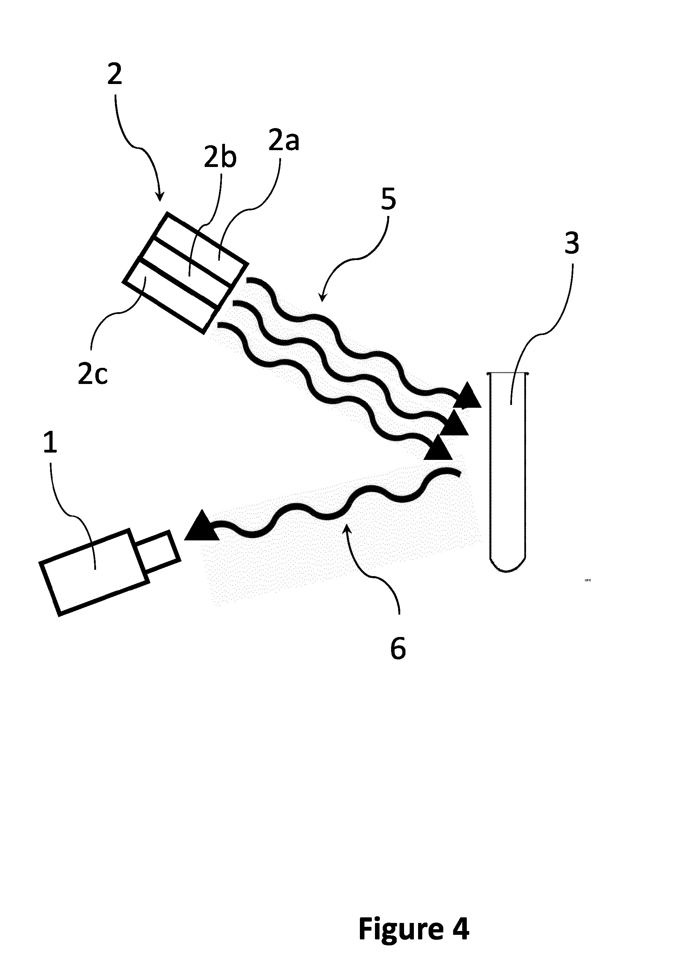

In the previous examples, filters are employed to secure that at a predetermined time only emitted light in one of the three or more non-overlapping and spectrally spaced-apart wavelength bands is detected by a predetermined pixel of the camera. **FIG. 4** illustrates a further alternative detection system in which the light source 2 includes a plurality of illuminants 2a, 2b, 2c, each of the plurality of illuminants 2a, 2b, 2c being configured to generate only light 5 of only one of the three or more non-overlapping and spectrally spaced-apart wavelength bands and the plurality of illuminants 2a, 2b, 2c being configured to be switched on sequentially so that at a predetermined time only emitted light 6 in one of the three or more non-overlapping and spectrally spaced-apart wavelength bands is detected by a predetermined pixel of the camera 1. In this way, the light source 2 directly generates only light in one of the three or more non-overlapping and spectrally spaced-apart wavelength bands at a time so that separate detection signals for each of the three or more non-overlapping and spectrally spaced-apart wavelength bands can be generated by the camera 1. For example, the illuminants 2a, 2b, 2c can be light emitting diodes or laser diodes that can be switched on sequentially. The term 'switched on' is not limited to modes of operation in which the illuminant ceases to emit light when it is not switched on. Rather, switching on an illuminant can also include removing a light stop (e.g., a blocking device) which prevents light of the particular illuminant from reaching the biological sample.

In other examples, the light source can be a tunable light source (e.g., a tunable laser) configured to be tuned to generate light of one of the three more non-overlapping and spectrally spaced-apart wavelength bands, the tunable light source being configured to be tuned on sequentially so that at a predetermined time only emitted light in one of the three or more non-overlapping and spectrally spaced-apart wavelength bands is detected by a predetermined pixel of the camera.

In still other examples each illuminant 2a, 2b, 2c can generate light in one of the three or more non-overlapping and spectrally spaced-apart wavelength bands by including a combination of a light emitting device that generates light in the respective wavelength band and an optical filter selected to reject light generated by the light emitting device outside the respective wavelength band. For instance, a green LED having a bandwidth of 30 nm can be equipped with a filter to reject all light outside a wavelength band having a 10 nm bandwidth.

The measures to secure that at a predetermined time only emitted light in one of the three or more non-overlapping and spectrally spaced-apart wavelength bands is detected by a predetermined pixel of the camera of two or more of the examples of **FIG. 1** to **FIG. 4** can also be combined in other examples.

In connection with **FIG. 1** to **FIG. 4** different arrangements using a camera having multiple pixels have been discussed to generate output signals corresponding to emitted light at each of the three or more non-overlapping and spectrally spaced-apart wavelength bands have been described. However, in alternative embodiments others detectors can be employed as well. For instance, the instead of using a camera the setups of **FIG. 1, FIG. 2** and **FIG. 4** in which the light emitted from the sample only contains light of a single wavelength band of the three or more non-overlapping and spectrally spaced-apart wavelength bands at a time (because of a time-sequential activation of the respective illuminants or filters), a detector using a single pixel can also be employed. For example, the detector can be a photodiode (e.g., a PIN-type or PN-type photodiode).

In other examples of these embodiments, an output signal corresponding to two or more pixels of multiple pixels of a detector can be used effectively as a single pixel output signal by combining the output of the two or more pixels.

In still other examples, the output signals corresponding to emitted light only at each of the three or more non-overlapping and spectrally spaced-apart wavelength bands can be computationally extracted from a continuous spectrum (e.g., by computationally filtering the output of a spectrum retrieved by spectrometer containing emitted light at the three or more non-overlapping and spectrally spaced-apart wavelength bands) to generate the output signals used in the interference detection algorithm of the present disclosure.

In the examples of **FIG. 1** to **FIG. 4** different aspects of the systems for detecting interferences in biological samples have been discussed. In some examples, the detection systems of the present disclosure can be configured to detect two or more of hemolytic interference, icteric interference and lipemic interference in a biological sample. Different aspects of the detection of two or more of these interferences will be discussed subsequently in connection with **FIG. 5** and **FIG. 6.**

**FIG. 5** illustrates characteristic absorption curves of hemolytic interference 10b, icteric interference 10c and lipemic interference 10a. As can be seen, the absorption curve of the hemolytic interference 10b and the icteric interference 10c have certain peaks whereas the absorption curve of the lipemic interference 10a has no prominent features but rather shows a continuously increasing absorption towards shorter wavelength across the visible spectrum (as a result of the absorption of the lipemic being caused mainly by scattering).

As can be seen in **FIG. 6,** the different features of the absorption spectra of the different interferences 10a, 10b, 10c can be exploited in a detection process of the interferences by selecting three non-overlapping and spectrally spaced-apart wavelength bands 11a, 11b, 11c that include certain characteristic features of the respective absorption spectra.

In one examples, a first wavelength band 11c of the three or more non-overlapping wavelength bands consists of wavelengths characteristic of a lipemic interference 10a but not characteristic of a hemolytic 10b and an icteric interference 10c. For example, as can be seen in **FIG. 6,** the absorption of the icteric and hemolytic interferences 10b, 10c drop sharply around 500 nm and 600 nm, respectively. Accordingly, the first wavelength band 11c of the three or more non-overlapping and spectrally spaced-apart wavelength bands 11a, 11b, 11c consists of wavelengths larger than 600 nm (preferably larger than 700 nm and more preferably between 750 nm and 850 nm).

In addition or alternatively, a second wavelength band 11b of the three or more non-overlapping and spectrally spaced-apart wavelength bands 11a, 11b, 11c consists of wavelengths characteristic of a lipemic and a hemolytic but not an icteric interference. As can be seen in **FIG. 6,** the icteric interference has dropped considerably below a level of the lipemic and the hemolytic interference at 530 nm. Accordingly, the second wavelength band 11b of the three or more non-overlapping and spectrally spaced-apart wavelength bands can extend between 530 and 600 nm (e.g., between 560 nm and 600 nm).

In addition, a third wavelength band 11a of the three or more non-overlapping and spectrally spaced-apart wavelength bands 11a, 11b, 11c consists of wavelengths characteristic of a lipemic, a hemolytic and an icteric interference. As depicted in **FIG. 6,** an absorption of the icteric interference 10c rises sharply at wavelengths below 530 nm. Accordingly, the third wavelength band 11a of the three or more non-overlapping and spectrally spaced-apart wavelength bands 11a, 11b, 11c consists of wavelengths below 550 nm, preferably below 475 nm.

In addition or alternatively, one or more (e.g., two or more) of the three or more non-overlapping and spectrally spaced-apart wavelength bands 11a, 11b, 11c (e.g., two or more non-overlapping and spectrally spaced-apart wavelength bands 11a, 11b, 11c) extend only over a wavelength range in which the absorption of at least one of the interferences to be detected (e.g., the absorption of a hemolytic or an icteric interference) is either strictly monotonically increasing or strictly monolithically decreasing.

In other words, one or more (e.g., two or more) of the three or more non-overlapping and spectrally spaced-apart wavelength bands 11a, 11b, 11c extend only over a portion of a flank (e.g., a falling flank) of a peak of the absorption spectrum of a particular interference to be detected (e.g., the icteric or hemolytic interference). For instance, the second wavelength band 11b in **FIG. 6** is selected to extend only over a falling flank of the absorption curve of the hemolytic interference.

Some interferences have no distinct peaks and valleys in a spectral band under observation. For instance, as can be seen in **FIG. 6,** the absorption spectrum of the lypemic interference has no distinct features as the lypemic interference mainly scatters light. Therefore, the absorption spectrum of the lypemic interference reflects the increasing scattering cross-section of the lipoproteins towards lower wavelengths and has no distinct peaks or valleys between 400 nm and 1000 nm. Thus, the above discussed rule regarding placing the observed wavelength bands only over a portion of a flank of a peak of the absorption spectrum relates to interferences other than interferences that mainly scatter light (e.g., a lypemic interference or other turbid interferences). Placing the observed wavelength bands only over a portion of a flank of a peak of the absorption spectrum of a particular interference can make the quantitative determination of concentration of interferences in a biological sample easier in some examples.

In addition or alternatively, each wavelength band of the three or more non-overlapping and spectrally spaced-apart wavelength bands ca have a bandwidth of less than 20 nm, preferably a bandwidth of less than 10 nm, more preferably a bandwidth of less than 5 nm. Selecting a comparatively narrow wavelength band can be advantageous to quantify the concentration of interferences in a biological sample in some examples. Spectrally broader wavelength bands might "smear" over features of the absorption spectra which might make quantified statements regarding the concentration of the interferences more difficult to obtain.

As discussed above, a narrow bandwidth of the observed wavelength bands can be achieved by using a light source with appropriate narrow emission characteristics (e.g., a laser or a filtered light source) or by filtering the emitted or re-emitted light by a narrow-band optical filter (e.g., a filter having a bandwidth of below 20 nm or a bandwidth of below 10 nm).

In addition or alternatively, each of the three or more non-overlapping and spectrally spaced-apart wavelength bands can have a bandwidth (e.g., a 1/e-bandwidth) of above 5 nm or above 2 nm (e.g., below 20 nm and above 2 nm, below 10 nm and above 2 nm or below 5 nm and above 2 nm).

In addition or alternatively, more than three non-overlapping and spectrally spaced-apart wavelength bands (e.g., four or more, five or more or six or more non-overlapping wavelength bands) can be used in some examples. In some examples, a number of used non-overlapping and spectrally spaced-apart wavelength bands is between three and eight.

In the detailed description of the present disclosure, several examples have been discussed in which one or more of a hemolytic interference, an icteric interference and a lipemic interference are detected. However, the techniques of the present disclosure can also be used to detect one or more other interferences alone or in combination with one or more of a hemolytic interference, an icteric interference and a lipemic interference.

In the examples discussed above, the light source and/or the camera (or other detector) are configured so that at a predetermined time only emitted light in one of the three or more non-overlapping and spectrally spaced-apart wavelength bands is detected by a predetermined pixel of the camera. However, in other examples the light source and/or the camera are configured so that at a predetermined time only emitted light in one of the at least two non-overlapping wavelength bands is detected by a predetermined pixel of the camera (or of another detector used to detect the emitted light described in the present disclosure).

In the preceding specification, numerous specific details are set forth in order to provide a thorough understanding of the present invention. It will be apparent, however, to one having ordinary skill in the art that the specific detail need not be employed to practice the present invention. In other instances, well-known materials or methods have not been described in detail in order to avoid obscuring the present invention.

Reference throughout the preceding specification to "one embodiment", "an embodiment", "one example", "an example", "one aspect" or "an aspect" means that a particular feature, structure or characteristic described in connection with the embodiment or example is included in at least one embodiment of the present invention. Thus, appearances of the phrases "in one embodiment", "in an embodiment", "one example" or "an example", "one aspect" or "an aspect" in various places throughout this specification are not necessarily all referring to the same embodiment or example.

Furthermore, the particular features, structures, or characteristics may be combined in any suitable combinations and / or sub-combinations in one or more embodiments or examples. In the preceding detailed description multiple examples of compartments of the present disclosure have been discussed. However, the compartments of the present disclosure can also be configured as set out in the following aspects:

1. A detection system for detecting interferences in biological samples, the system comprising:

a light source (2) configured to illuminate a biological sample (3) with light (5),
wherein the light (5) includes light in three or more non-overlapping and spectrally spaced-apart wavelength bands (11a, 11b, 11c);
a detector (1) having one or more pixels configured to detect light (6) emitted from the biological sample (3) in response to illumination by the light source (2), and configured to output an output signal indicative of a detected light level,
wherein the light source (2) and/or the detector (1) are configured so that at a predetermined time only emitted light (6) in one of the three or more non-overlapping and spaced apart wavelength bands (11a; 11b; 11c) is detected by a predetermined pixel of the detector (1); and
a processor configured to receive output signals corresponding to emitted light (6) only at each of the three or more non-overlapping and spectrally spaced-apart wavelength bands (11a; 11b; 11c) and to execute an interference detection algorithm using the received output signals.

2. The detection system of aspect 1 wherein two or more wavelength bands of the three or more non-overlapping and spectrally spaced-apart wavelength bands has a bandwidth of less than 20 nm, preferably a bandwidth of less than 10 nm, more preferably a bandwidth of less than 5 nm.

3. The detection system of aspect 2 wherein each of the three or more non-overlapping and spectrally spaced-apart wavelength bands has a bandwidth of less than 20 nm and a bandwidth of more than 5 nm.

4. The detection system of any one of aspects 1 to 3 wherein the light source (2) includes a plurality of optical filters (7) adapted to sequentially let pass only light of one of the three or more non-overlapping and spectrally spaced-apart wavelength bands (11a; 11b; 11c) so that at a predetermined time only emitted light (6) in one of the three or more non-overlapping and spectrally spaced-apart wavelength bands (11a; 11b; 11c) is detected by a predetermined pixel of the detector (1).

5. The detection system of any one of aspects 1 to 4 wherein the light source (2) includes a plurality of illuminants (2a, 2b, 2c), each of the plurality of illuminants (2a, 2b, 2c) configured to generate only light (5) of one of the three or more non-overlapping and spectrally spaced-apart wavelength bands (11a; 11b; 11c), wherein the plurality of illuminants (2a, 2b, 2c) are configured to be switched on sequentially so that at a predetermined time only emitted light (6) in one of the three or more non-overlapping and spectrally spaced-apart wavelength bands (11a; 11b; 11c) is detected by a predetermined pixel of the detector (1).

6. The detection system of any one of aspects 1 to 4 wherein the light source (2) is a tunable light source configured to be tuned to generate light (5) of one of the three or more non-overlapping and spectrally spaced-apart wavelength bands (11a; 11b; 11c), wherein the tunable light source is configured to be tuned sequentially so that at a predetermined time only emitted light (6) in one of the three or more non-overlapping and spectrally spaced-apart wavelength bands (11a; 11b; 11c) is detected by a predetermined pixel of the detector (1).

7. The detection system of any one of aspects 1 to 6 wherein the detector (2) includes a plurality of optical filters (8) adapted to sequentially let pass only light of one of the three or more non-overlapping and spectrally spaced-apart wavelength bands (11a; 11b; 11c) so that at a predetermined time only emitted light (6) in one of the three or more non-overlapping and spectrally spaced-apart wavelength bands (11a; 11b; 11c) is detected by a predetermined pixel of the detector (1).

8. The detection system of any one of aspects 1 to 6 wherein the detector (1) includes multiple pixels and a plurality of filters (8a; 8b; 8c) arranged over the multiple pixels, wherein the plurality of filters (8a; 8b; 8c) includes at least one filter adapted to let pass only light of one of the three or more non-overlapping and spectrally spaced-apart wavelength bands (11a; 11b; 11c) for each of the three or more non-overlapping and spectrally spaced apart wavelength bands (11a; 11b; 11c) so that at a predetermined time only emitted light (6) in one of the three or more non-overlapping and spectrally spaced-apart wavelength bands (11a; 11b; 11c) is detected by a predetermined pixel of the detector (1).

9. The detection system of one of the preceding aspects, wherein the interference detection algorithm includes combining the output signals corresponding to emitted light (6) at each of the three or more non-overlapping and spectrally spaced-apart wavelength bands (11a; 11b; 11c) into a single value and determining quantity of each of three or more different interferences by processing the single value.

10. The detection system of aspects 1, 2, 3, 4, 6, 7, 8 or 9 wherein the light source (2) is a white light source, or wherein the light source (2) includes one or more light emitting diodes (2a, 2b, 2c).

11. The detection system of any one of the preceding aspects wherein the detector (1) is a camera having multiple pixels, preferably a CCD camera or CMOS camera.

12. The detection system of aspect 4 or 8 wherein the filters (7; 8; 8a; 8b; 8c) are reflective and/or absorptive optical filters.

13. The detection system of any of the preceding aspects, wherein the interference detection algorithm is configured to detect hemolytic, icteric and lipemic interferences.

14. The detection system of any one of the preceding aspects, wherein a first wavelength band (11c) of the three or more non-overlapping and spectrally spaced-apart wavelength bands (11a; 11b; 11c) consists of wavelengths larger than 620 nm, preferably larger than 700 nm, more preferably between 750 nm and 850 nm.

15. The detection system of any one of the preceding aspects, wherein a second wavelength band (11b) of the three or more non-overlapping and spectrally spaced-apart wavelength bands (11a; 11b; 11c) extends between 520 and 600 nm, preferably between 560 nm and 600 nm.

16. The detection system of any one of the preceding aspects, wherein a third wavelength band (11a) of the three or more non-overlapping and spectrally spaced-apart wavelength bands (11a; 11b; 11c) consists of wavelengths below 550 nm, preferably below 475 nm .

17. The detection system of one of the preceding aspects, wherein a first wavelength band (11c) of the three or more non-overlapping and spectrally spaced-apart wavelength bands (11a; 11b; 11c) consists of wavelengths characteristic of a lipemic interference but not characteristic of a hemolytic and an icteric interference.

18. The detection system of aspect 17, wherein a second wavelength band (11b) of the three or more non-overlapping and spectrally spaced-apart wavelength bands (11a; 11b; 11c) consists of wavelengths characteristic of a lipemic and a hemolytic but not an icteric interference.

19. The detection system of aspect 18, wherein a third wavelength band (11a) of the three or more non-overlapping and spectrally spaced-apart wavelength bands (11a; 11b; 11c) consists of wavelengths characteristic of a lipemic, a hemolytic and an icteric interference.

20. The detection system of any one of the preceding aspects wherein one or more or two or more non-overlapping and spectrally spaced-apart wavelength bands (11a, 11b, 11c) of the three or more non-overlapping and spectrally spaced-apart wavelength bands (11a, 11b, 11c) extend only over a wavelength range in which the absorption of at least one or two of the interferences to be detected is either strictly monotonically increasing or strictly monolithically decreasing, wherein one or two of the interferences to be detected is not a lipemic interference.

21. The detection system of any one of the preceding aspects wherein one or more or two or more of the three or more non-overlapping and spectrally spaced-apart wavelength bands (11a, 11b, 11c) extend only over a portion of a flank of a peak of the absorption spectrum of at least one or two interferences to be detected, wherein the interferences to be detected is not a lipemic interference.

22. A method for detecting interferences in biological samples, the method comprising:

illuminating a biological sample (3) with light (5), wherein the light (5) includes three or more non-overlapping and spectrally spaced-apart wavelength bands (11a; 11b; 11c); detecting light emitted (6) from the biological sample (3) in response to the illumination by a detector (1) including one or more pixels, wherein only emitted light (6) in one of the three or more non-overlapping and spectrally spaced-apart wavelength bands (11a; 11b; 11c) is detected by a predetermined pixel of the detector (1) at a predetermined time; and executing an interference detection algorithm based on detected emitted light (6) only at each of the three or more non-overlapping and spectrally spaced apart wavelength bands (11a; 11b; 11c).

23. A detection system for detecting interferences in biological samples, the system comprising:

a light source configured to illuminate a biological sample with light, wherein the light includes two or more non-overlapping and spectrally spaced-apart wavelength bands; a detector including one or more pixels configured to detect light emitted from the biological sample in response to illumination by the light source, and configured to output an output signal indicative of a detected light level, wherein the light source and/or the detector are configured so that at a predetermined time only emitted light in one of the two or more non-overlapping and spectrally spaced-apart wavelength bands is detected by a predetermined pixel of the detector, and wherein the light source and/or the detector are configured such that emitted light of the two or more non-overlapping and spectrally spaced-apart wavelength bands is detected sequentially; and a processor configured to receive output signals corresponding to remitted light only at each of the two or more non-overlapping and spectrally spaced-apart wavelength bands and to execute an interference detection algorithm using the received output signals.

24. The detection system of aspect 23 wherein each wavelength band of the two or more non-overlapping and spectrally spaced-apart wavelength bands has a bandwidth of less than 20 nm, preferably a bandwidth of less than 10 nm, more preferably a bandwidth of less than 5 nm.

25. The detection system of aspect 24 wherein each of the two or more non-overlapping and spectrally spaced-apart wavelength bands has a bandwidth of less than 20 nm and a bandwidth of more than 5 nm.

26. The detection system of any one of aspects 23 to 25 wherein the light source includes a plurality of optical filters adapted to sequentially let pass only light of one of the two more non-overlapping and spectrally spaced-apart wavelength bands so that at a predetermined time only remitted light in one of the two or more non-overlapping and spectrally spaced-apart wavelength bands is detected by a predetermined pixel of the detector.

27. The detection system of any one of aspects 23 or 26 wherein the light source includes a plurality of illuminants configured to generate only light of one of the two more non-overlapping and spectrally spaced-apart wavelength bands, wherein the plurality of illuminants are configured to be switched on sequentially so that at a predetermined time only emitted light in one of the two or more non-overlapping and spectrally spaced-apart wavelength bands is detected by a predetermined pixel of the detector.

28. The detection system of any of aspects 23 to 27 wherein the camera includes a plurality of optical filters adapted to sequentially let pass only light of one of the two more non-overlapping and spectrally spaced-apart wavelength bands so that at a predetermined time only emitted light in one of the two or more non-overlapping and spectrally spaced-apart wavelength bands is detected by a predetermined pixel of the detector.

**Claims**

1. A detection system for detecting inter 1 samples, the system comprising:

    a light source (2) configured to illuminate a biological sample (3) with light (5),
    wherein the light (5) includes light in three or more non-overlapping and spectrally spaced-apart wavelength bands (11a, 11b, 11c);
    a detector (1) having one or more pixels configured to detect light (6) emitted from the biological sample (3) in response to illumination by the light source (2), and configured to output an output signal indicative of a detected light level,
    wherein the light source (2) and/or the detector (1) are configured so that at a predetermined time only emitted light (6) in one of the three or more non-overlapping and spaced apart wavelength bands (11a; 11b; 11c) is detected by a predetermined pixel of the detector (1); and
    a processor configured to receive output signals corresponding to emitted light (6) only at each of the three or more non-overlapping and spectrally spaced-apart wavelength bands (11a; 11b; 11c) and to execute an interference detection algorithm using the received output signals.

2. The detection system of claim 1 wherein two or more of the wavelength band of the three or more non-overlapping and spectrally spaced-apart wavelength bands has a bandwidth of less than 20 nm, preferably a bandwidth of less than 10 nm, more preferably a bandwidth of less than 5 nm.

3. The detection system of claim 1 or claim 2 wherein the light source (2) includes a plurality of optical filters (7) adapted to sequentially let pass only light of one of the three or more non-overlapping and spectrally spaced-apart wavelength bands (11a; 11b; 11c) so that at a predetermined time only emitted light (6) in one of the three or more non-overlapping and spectrally spaced-apart wavelength bands (11 a; 11b; 11c) is detected by a predetermined pixel of the detector (1).

4. The detection system of any one of claims 1 to 3 wherein the light source (2) includes a plurality of illuminants (2a, 2b, 2c), each of the plurality of illuminants (2a, 2b, 2c) configured to generate only light (5) of one of the three or more non-overlapping and spectrally spaced-apart wavelength bands (11a; 11b; 11c), wherein the plurality of illuminants (2a, 2b, 2c) are configured to be switched on sequentially so that at a predetermined time only emitted light (6) in one of the three or more non-overlapping and spectrally spaced-apart wavelength bands (11a; 11b; 11c) is detected by a predetermined pixel of the detector (1).

5. The detection system of any one of claims 1 to 3 wherein the light source (2) is a tunable light source configured to be tuned to generate light (5) of one of the three or more non-overlapping and spectrally spaced-apart wavelength bands (11a; 11b; 11c), wherein the tunable light source is configured to be tuned sequentially so that at a predetermined time only emitted light (6) in one of the three or more non-overlapping and spectrally spaced-apart wavelength bands (11a; 11b; 11c) is detected by a predetermined pixel of the detector (1).

6. The detection system of any of claims 1 to 5 wherein the detector (2) includes a plurality of optical filters (8) adapted to sequentially let pass only light of one of the three or more non-overlapping and spectrally spaced-apart wavelength bands (11a; 11b; 11c) so that at a predetermined time only emitted light (6) in one of the three or more non-overlapping and spectrally spaced-apart wavelength bands (11a; 11b; 11c) is detected by a predetermined pixel of the detector (1).

7. The detection system of any of claims 1 to 5 wherein the detector (1) includes multiple pixels and a plurality of filters (8a; 8b; 8c) arranged over the multiple pixels, wherein the plurality of filters (8a; 8b; 8c) includes at least one filter adapted to let pass only light of one of the three or more non-overlapping and spectrally spaced-apart wavelength bands (11a; 11b; 11c) for each of the three or more non-overlapping and spectrally spaced apart wavelength bands (11a; 11b; 11c) so that at a predetermined time only emitted light (6) in one of the three or more non-overlapping and spectrally spaced-apart wavelength bands (11a; 11b; 11c) is detected by a predetermined pixel of the detector (1).

8. The detection system of claims 1, 2, 4, 5, 6 or 7 wherein the light source (2) is a white light source, or wherein the light source (2) includes one or more light emitting diodes (2a, 2b, 2c).

9. The detection system of any one of the preceding claims wherein the detector (1) is a camera having multiple pixels, preferably a CCD camera or CMOS camera.

10. The detection system of any of the preceding claims, wherein the interference detection algorithm is configured to detect hemolytic, icteric and lipemic interferences.

11. The detection system of any one of the preceding claims wherein one or more or two or more non-overlapping and spectrally spaced-apart wavelength bands (11a, 11b, 11c) of the three or more non-overlapping and spectrally spaced-apart wavelength bands (11a, 11b, 11c) extend only over a wavelength range in which the absorption of at least one or two of the interferences to be detected is either strictly monotonically increasing or strictly monolithically decreasing, wherein one or two of the interferences to be detected is not a lipemic interference.

12. The detection system of any one of the preceding claims wherein one or more or two or more of the three or more non-overlapping and spectrally spaced-apart wavelength bands (11a, 11b, 11c) extend only over a portion of a flank of a peak of the absorption spectrum of at least one or two interferences to be detected, wherein the interferences to be detected are not a lipemic interference.

13. The detection system of any one of the preceding claims, wherein a first wavelength band (11c) of the three or more non-overlapping and spectrally spaced-apart wavelength bands (11a; 11b; 11c) consists of wavelengths larger than 620 nm, preferably larger than 700 nm, more preferably between 750 nm and 850 nm.

14. The detection system of any one of the preceding claims, wherein a second wavelength band (11b) of the three or more non-overlapping and spectrally spaced-apart wavelength bands (11a; 11b; 11c) extends between 520 and 600 nm, preferably between 560 nm and 600 nm, and wherein a third wavelength band (11a) of the three or more non-overlapping and spectrally spaced-apart wavelength bands (11a; 11b; 11c) consists of wavelengths below 550 nm, preferably below 475 nm.

15. A method for detecting interferences in biological samples, the method comprising:

illuminating a biological sample (3) with light (5),

wherein the light (5) includes three or more non-overlapping and spectrally spaced-apart wavelength bands (11a; 11b; 11c);

detecting light emitted (6) from the biological sample (3) in response to the illumination by a detector (1) including one or more pixels, wherein only emitted light (6) in one of the three or more non-overlapping and spectrally spaced-apart wavelength bands (11 a; 11b; 11c) is detected by a predetermined pixel of the detector (1) at a predetermined time; and

executing an interference detection algorithm based on detected emitted light (6) only at each of the three or more non-overlapping and spectrally spaced apart wavelength bands (11a; 11b; 11c).

**Figure 1**

**Figure 2**

**Figure 3**

**Figure 4**

Figure 5

**Figure 6**

Europäisches
Patentamt

European
Patent Office

Office européen
des brevets

# EUROPEAN SEARCH REPORT

Application Number

EP 15 19 3668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/192342 A1 (SASS KARL [DE] ET AL) 10 July 2014 (2014-07-10) | 1,2,4,5, 7,9-11, 13,15 | INV. G01N21/31 |
| Y | * abstract; figure 2 * <br> * paragraphs [0001], [0017] - [0018], [0043], [0050] - [0074] * <br> ----- | 3,6,8, 12,14 | |
| Y | WO 2006/040387 A1 (THERMO ELECTRON OY [FI]; JOHANSSON HENRIK [FI]) 20 April 2006 (2006-04-20) <br> * abstract * <br> * page 8, lines 32-36 * <br> * page 9, lines 12-14 * <br> ----- | 3,6,12, 14 | |
| Y | WO 2009/130580 A1 (AMC AMSTERDAM [NL]; AALDERS MAURICE CHRISTIAN GERA [NL]) 29 October 2009 (2009-10-29) <br> * page 5, lines 19-32; figure 2 * <br> ----- | 8 | |
| A | US 4 267 572 A (WITTE WOLFGANG) 12 May 1981 (1981-05-12) <br> * abstract; figure 1 * <br> ----- | 1-15 | |
| A | US 4 263 512 A (SAGUSA HISAYUKI ET AL) 21 April 1981 (1981-04-21) <br> * abstract; figure 5 * <br> ----- | 1-15 | |

TECHNICAL FIELDS SEARCHED (IPC)

G01N

The present search report has been drawn up for all claims

| Place of search | Date of completion of the search | Examiner |
|---|---|---|
| Munich | 27 April 2016 | Meacher, David |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

18

## ANNEX TO THE EUROPEAN SEARCH REPORT
## ON EUROPEAN PATENT APPLICATION NO.

EP 15 19 3668

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2016

| Patent document cited in search report | | | Publication date | Patent family member(s) | | | Publication date |
|---|---|---|---|---|---|---|---|
| US 2014192342 | A1 | | 10-07-2014 | CN | 103649721 | A | 19-03-2014 |
| | | | | EP | 2549264 | A1 | 23-01-2013 |
| | | | | EP | 2710348 | A1 | 26-03-2014 |
| | | | | JP | 2014521095 | A | 25-08-2014 |
| | | | | US | 2014192342 | A1 | 10-07-2014 |
| | | | | WO | 2013010970 | A1 | 24-01-2013 |
| WO 2006040387 | A1 | | 20-04-2006 | EP | 1802959 | A1 | 04-07-2007 |
| | | | | US | 2009009750 | A1 | 08-01-2009 |
| | | | | WO | 2006040387 | A1 | 20-04-2006 |
| WO 2009130580 | A1 | | 29-10-2009 | EP | 2273914 | A1 | 19-01-2011 |
| | | | | GB | 2461246 | A | 30-12-2009 |
| | | | | GB | 2462892 | A | 03-03-2010 |
| | | | | US | 2011112385 | A1 | 12-05-2011 |
| | | | | WO | 2009130580 | A1 | 29-10-2009 |
| US 4267572 | A | | 12-05-1981 | GB | 2020009 | A | 07-11-1979 |
| | | | | US | 4267572 | A | 12-05-1981 |
| US 4263512 | A | | 21-04-1981 | DE | 2847176 | A1 | 07-06-1979 |
| | | | | US | 4263512 | A | 21-04-1981 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1059522 A1